# EUROPEAN PATENT SPECIFICATION

(11) **EP 0 694 439 B1**
(45) Date of publication and mention of the grant of the patent: **25.08.1999**
(21) Application number: 95111636.7
(22) Date of filing: 21.07.1995
(51) Int. Cl.: B60P 3/34, E04F 10/06

(54) **Winder for operating awnings, particularly for vehicles in general**
Wickelvorrichtung für Markisen, insbesondere für Kraftfahrzeuge
Enrouleur pour auvents, en particulier pour véhicules à moteur

(30) Priority: 26.07.1994 IT MI941599
(43) Date of publication of application: 31.01.1996
(73) Proprietor: Pozzi, Carlo Maurizio, CH-6977 Ruvigliana (CH)
(72) Inventor: Pozzi, Carlo Maurizio, CH-6977 Ruvigliana (CH)
(74) Representative: Modiano, Guido, Dr.-Ing.

(56) References cited:
- EP-A- 0 246 338
- DE-A- 2 441 957
- DE-A- 4 200 422
- US-A- 1 643 281
- US-A- 2 107 608
- US-A- 3 612 145

## Description

The present invention relates to a winder for operating awnings particularly for vehicles in general.

It is known that awnings applied to motor vehicles such as for example campers, caravans, and the like, generally have an outer case that is applied to the body of the vehicle and contains a roller for rolling up and unrolling a canvas that is connected, at the other end, to a front element supported by caliper-like arms provided with elastic elements operating in the direction of the extraction of the canvas.

The canvas is usually operated by means of a winder associated with one end of the containment case; the winder contains kinematic systems of the so-called irreversible type, that is to say, which allow transmission of movement toward the drive shaft but should prevent accidental extraction of the awning due to the thrust applied by the elastic elements of the caliper-like arms.

It has been observed that possible vibrations, for example while the vehicle is travelling, can cause the accidental gradual extension of the awning, with obvious consequent risks for a moving vehicle.

Locking means that, for example, stably connect the front element to the box-like case in closed position, preventing accidental extraction of the awning, or other means that block the rotation of the canvas supporting roller, have already been adopted to solve this problem.

All known solutions are usually extremely complex from a manufacturing point of view and above all require that the locking means be removed when the awning is extracted, with an operation that is separate from the typical operation for actuating the winder.

The solutions of the known art have therefore generally proved themselves to be scarcely practical and not always appreciated by the user, who had to carry out a series of separate operations to extract the awning.

The features disclosed in the preamble of claim 1 are commonly known in the art.

The aim of the invention is indeed to solve the above described problems by providing a winder for operating awnings particularly for vehicles in general, in which it is possible to have locking means that are automatically disengageable when the winder is operated.

Within the scope of this aim, a particular object of the invention is to provide a winder in which the locking means always operate automatically whenever the winder is not being operated, so that said locking means operate even when the awning is partially extracted.

Another object of the present invention is to provide a winder that is internally provided with stroke limiting means preventing the rolling-up in reverse of the canvas on the roll-up and unrolling roller.

Another object of the present invention is to provide a winder that, by virtue of its particular constructive characteristics, is capable of giving the greatest assurances of reliability and safety in use and is also competitive from a purely economic point of view.

This aim, these objects, and others that will become apparent hereinafter are achieved by a winder for operating awnings particularly for vehicles in general, according to the invention, which comprises, inside a containment case, kinematic means that can be operated from the outside and are operatively connected to the drive shaft of a roller for rolling up and unrolling a canvas associated with a front element connected to caliper-like arms that can move apart elastically; characterized in that it comprises means for temporarily locking the rotation of said drive shaft that are associated with the external actuation shaft, which supports a gear for the actuation of said kinematic means, said external actuation shaft being arrangeable in a locking position, in which said locking means engage said drive shaft, preventing its rotation and said actuation gear is disengaged from said kinematic means, and in an actuation position, in which said locking means disengage from said drive shaft and said actuation gear couples to said kinematic means.

Further characteristics and advantages will become apparent from the description of a preferred but not exclusive embodiment of a winder for operating awnings particularly for vehicles in general, illustrated only by way of non-limitative example in the accompanying drawings, wherein:

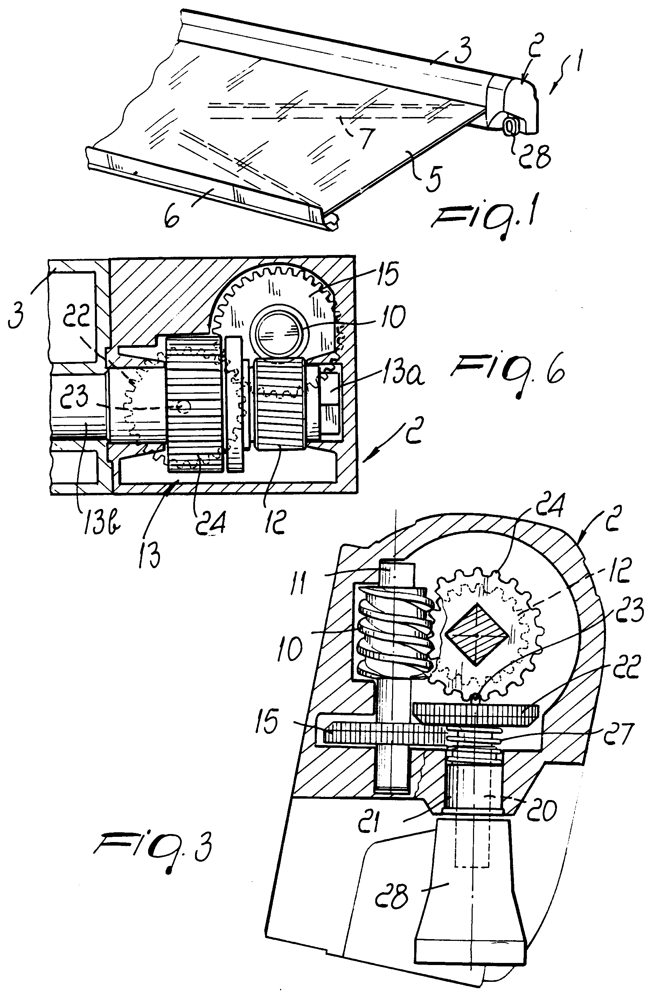

figure 1 is a schematic view of the winder according to the invention, applied to an awning;
figure 2 is a perspective view of the coupling between the drive shaft and the kinematic means;
figure 3 is a partially sectional view of the winder taken from one end and along a vertical plane;
figure 4 is a front sectional view of the winder, taken along a vertical plane;
figure 5 is a view of the winder with the actuation shaft in the actuation position;
figure 6 is a sectional view of the winder, taken along a horizontal plane;

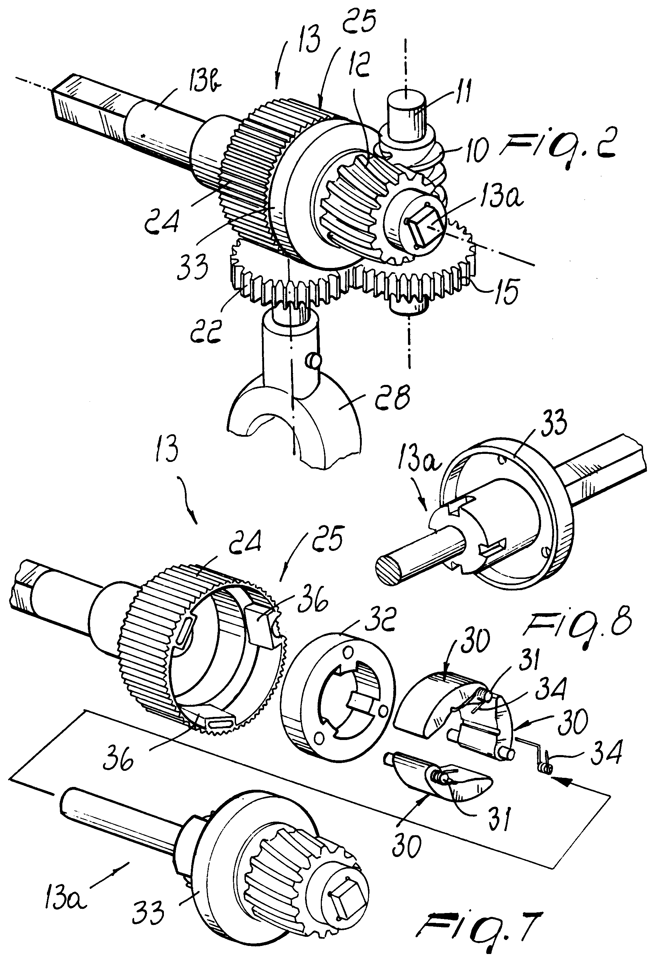

figure 7 is an exploded perspective view of the drive shaft, showing the stroke limiting means which prevent the reverse rolling-up of the canvas on the roller;

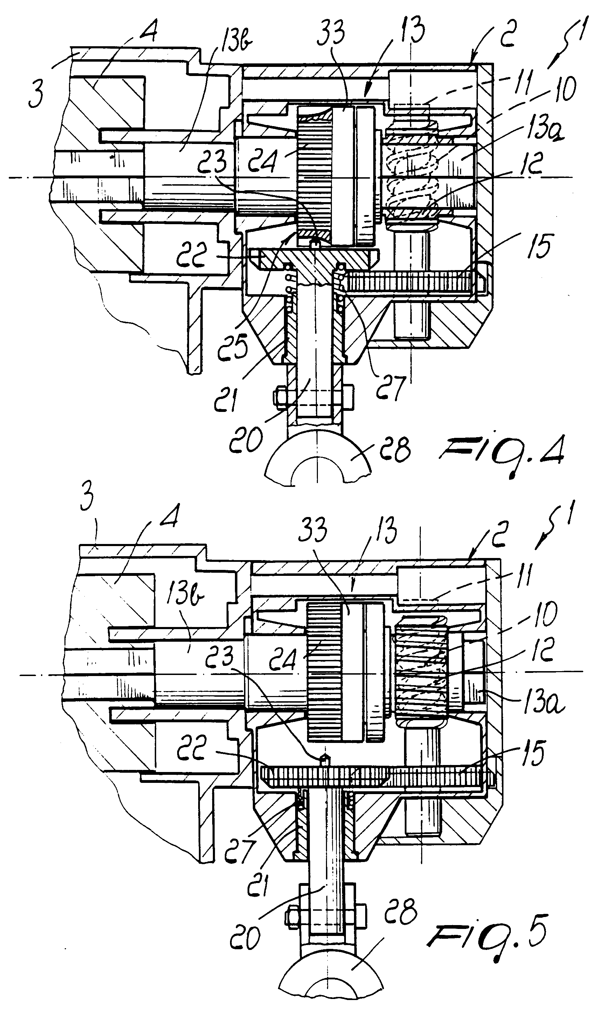

figure 8 is a perspective view of the input portion of the drive shaft;
figure 9 is a sectional view of the stroke limiting means during the normal unrolling of the awning;
figure 10 is a view of the stroke limiting means if the winder is actuated in the awning unrolling direction when the awning is completely unwound.

With reference to the above figures, the reference numeral 1 generally designates the winder for operating awnings particularly for vehicles in general, according to the invention, which comprises a containment case 2 placed adjacent to one end of an elongated container 3 for supporting a roller 4 for the rolling-up and unrolling of a canvas 5; said canvas is connected, at the other end, to a front element 6 that is associated by means of caliper-like arms 7 provided with elastic means that tend to open out said arms and consequently extract the awning.

Kinematic means that can be operated from outside are provided inside the containment case 1 and are advantageously provided by means of a worm screw 10 that is keyed on a vertical auxiliary shaft 11 and meshes with a helical gear 12 rigidly associated for rotating with a drive shaft, generally designated by the numeral 13, connected to the roller 4 to make it rotate.

A gear 15 is provided on the auxiliary shaft 11 and, as will become apparent hereinafter, can be coupled to an actuation shaft 20 for the actuation of the winder from outside.

In greater detail, the actuation shaft 20 is mounted so as to be slidable with respect to a bush 21 fixed on the containment case.

At the end that lies inside the winder, the actuation shaft 20 is provided with an actuation gear 22 keyed to said shaft and with locking means constituted by a locking pin 23 that is adapted to engage a circumferential set of teeth 24 formed by a cup-shaped element 25 that is rigidly associated with the drive shaft 13.

Elastic means, constituted by a helical spring 27 the ends whereof abut against the gear 22 and the bush 21, act on the shaft 20; when no external actuation is performed, said elastic means keep the pin 23 coupled to the set of teeth 24; moreover, in these conditions, the gear 22 is disengaged from the gear 15.

Outside the containment case 2, a conventional eyelet 28 for engagement with a crank rod or the like to rotate the actuation shaft 20 is connected to said actuation shaft 20.

When no action is exerted from outside, the spring 27 places the actuation shaft in the locking position, with the pin 23 engaged in the set of teeth 24 and the gear 22 disengaged from the gear 15.

In order to operate the winder, the actuation shaft 20 must be moved into the actuation position by applying a traction that overcomes the elastic contrast of the spring 27 and disengages the pin 23 from the set of teeth 24 and couples the gear 22 to the gear 15.

In these conditions, the rotation applied to the actuation shaft 20, by means of the kinematic coupling constituted by the gear 22 that actuates the gear 15, which turns the worm screw 10, which engages the helical gear 12, causes the rotation of the drive shaft 13 and therefore of the roller 3, allowing to open or close the awning according to the direction of the rotation.

Another important particularity of the invention is constituted by the fact that stroke limiting means are provided which prevent the possibility of rolling up the awning in reverse on the roller by continuing to turn the actuation shaft in the same direction once the awning has reached the maximum extraction position.

Said stroke limiting means are directly formed inside the containment case of the winder and are provided in practice on the drive shaft 13, which is substantially constituted by an input portion 13a and an output portion 13b joined to each other by a joint that provides the stroke limiting means.

More specifically, the helical gear 12 is associated on the input portion 13a, whereas the cup-shaped body 25 that forms the set of teeth 24 is provided on the portion 13b.

The cup-shaped body 24 contains pawls 30 provided with hinge pivots 31 that are retained by a washer 32, which is connected to and rotates along with the portion 13a and can be inserted in the cup-shaped body, and by a flange 33 formed by the input portion 13a.

Coiled springs 34 act on the pawls 30 and push them outwards so as to engage them with radial abutment protrusions 36 formed by the inner surface of the cup-shaped body.

In practical use, when the awning is opened, unrolling the canvas, said awning is pulled outwards by the elastic means of the caliper-like arms and is retained in practice by the engagement of the ends of the pawls 30 against the radial protrusions 36.

Substantially, the rotary motion applied to the portion 13a of the drive shaft 13 in practice allows to perform a rotation that allows to unroll the awning.

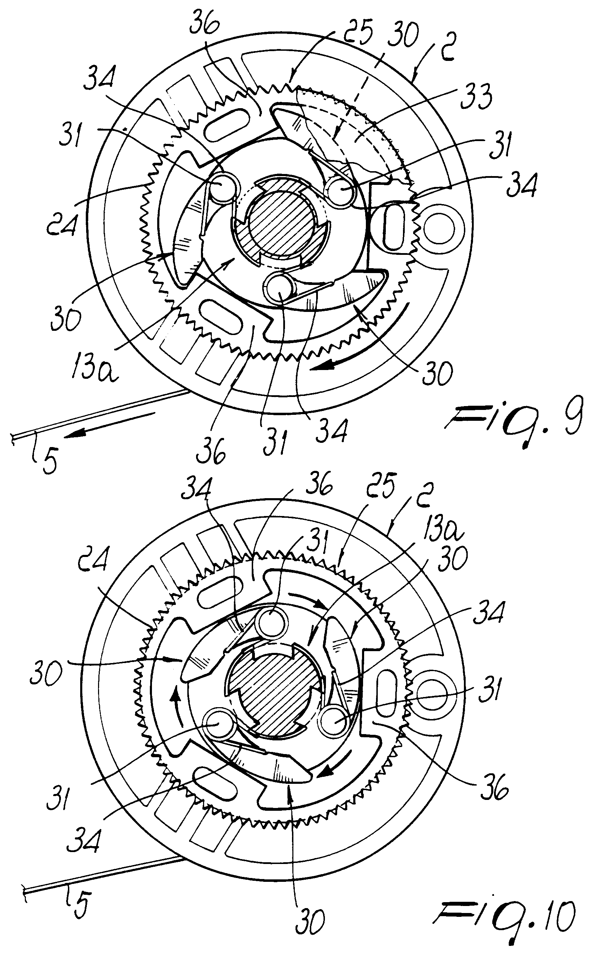

If, once the canvas has been completely extracted, the actuation shaft 20 continues to be actuated, the portion 13a starts to rotate with respect to the portion 13b, since the rotation applied to the portion 13a is not transmitted to the portion 13b of the drive shaft, as the pawls retract inwards out of engagement with the radial protrusions 36, as shown schematically in figure 10.

To roll up the awning, one acts on the actuation shaft, in the opposite direction of course, causing the portions 13a and 13b of the drive shaft 13 to rotate together, consequently rolling up the awning.

When the awning is completely rolled up, the release of the actuation shaft causes the automatic engagement of the locking means.

The description provided above shows, therefore, that the invention achieves the intended aim and objects and in particular the fact is stressed that the locking means are provided directly inside the winder and are automatically disengaged when the winder is actuated, since in order to actuate the winder it is necessary to apply a translatory action to the actuation shaft, which by meshing with the kinematic actuation means automatically disengages the locking means.

With the above described arrangement, moreover, the locking means act whenever the actuation shaft ceases to be actuated, thus allowing to have a locking action even when the awning is partially extracted.

Furthermore, another important aspect of the invention is constituted by the fact that the stroke limiting means that prevent the awning from rolling up in reverse on the roller are provided directly inside the winder and do not constitute a separate element, as instead occurs in the solutions of the known art.

From the above description it is therefore clear that the invention achieves the intended aim and objects; in particular, it is once more stressed that the invention is extremely compact and very easy to use.

The invention thus conceived is susceptible of numerous modifications and variations, all of which are within the scope of the inventive concept.

All the details may furthermore be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Winder for operating awnings particularly for vehicles in general, comprising, inside a containment case (2), kinematic means (10,11,12) that can be operated from the outside and are operatively connected to the drive shaft (13) of a roller (4) for rolling up and unrolling a canvas (5) that is associated with a front element (6) connected to caliper-like arms (7) that can move apart elastically; characterized in that it comprises means (23) for temporarily locking the rotation of said drive shaft (13) that are associated with the external actuation shaft (20), which supports a gear (22) for the actuation of said kinematic means, said external actuation shaft (20) being arrangeable in a locking position, in which said locking means engage said drive shaft (13), preventing its rotation, and said actuation gear (22) is disengaged from said kinematic means (10,11,12), and in an actuation position, in which said locking means (23) disengage from said drive shaft (13) and said actuation gear (22) couples to said kinematic means (10,11,12).

2. Winder according to claim 1, characterized in that said actuation shaft (20) is supported, so as to be axially slidable, in a bush (21) fixed to said containment case (2).

3. Winder according to the preceding claims, characterized in that it comprises elastic means constituted by a helical spring (27) the ends whereof abut between said actuation gear (22) and said bush (21), said spring being adapted to elastically push said locking means (23) into engagement with said drive shaft (13).

4. Winder according to one or more of the preceding claims, characterized in that said locking means are constituted by a locking pin (23) provided at the axial end of said actuation shaft (20) and meshes with a circumferential set of teeth (24) formed on said drive shaft (13).

5. Winder according to one or more of the preceding claims, characterized in that it comprises an eyelet (28) that is connected to said actuation shaft (20) outside said containment case (2) and can be engaged by a crank rod to make said actuation shaft (20) rotate.

6. Winder according to one or more of the preceding claims, characterized in that said kinematic means comprise an auxiliary shaft (11) that is rotatably supported by said containment case (2) and is provided with a gear (15) that is keyed on said shaft (11) and can be engaged by said actuation gear (22), said auxiliary shaft (11) being provided with a worm screw (10) meshing with a helical gear (12) that rotates rigidly with said drive shaft (13).

7. Winder according to one or more of the preceding claims, characterized in that it comprises, inside said containment case (2), stroke limiting means (30-33) that are interposed between said actuation shaft (20) and the output (13b) of said drive shaft (13) and are adapted to prevent the awning from rolling up in reverse on the roller (4) for rolling-up and unrolling said awning.

8. Winder according to one or more of the preceding claims, characterized in that said drive shaft (13) has an input portion (13a) and an output portion (13b) joined to each other by a joint (30-33) providing said stroke limiting means.

9. Winder according to one or more of the preceding claims, characterized in that said stroke limiting means are constituted by pawls (30) provided with hinge pivots (31) retained by a washer (32) that is rigidly coupled to said input portion (13a) and can be inserted in a cup-shaped body (25) rigidly coupled to said output portion (13b) of the drive shaft (13), and by a flange (33) formed by said input portion (13a) of the drive shaft (13), coiled springs (34) acting on said pawls (30), said coiled springs being adapted to push said pawls (30) outwards so as to make them engage radial abutment protrusions (36) formed on the inner surface of said cup-shaped element (25).

10. Winder according to one or more of the preceding claims, characterized in that said set of teeth (24) with which said locking means (23) mesh is formed on the outer surface of said cup-shaped element (25).

## Patentansprüche

1. Wickelvorrichtung für Markisen, insbesondere bei Kraftfahrzeugen, beinhaltend, innerhalb eines Gehäuses (2), kinematische Mittel (10, 11, 12), welche von der Außenseite betätigbar sind und in Wirkverbindung mit der Antriebswelle (13) einer Rolle (4) zum Aufrollen und Abrollen eines Tuches (5) stehen, welches einem Vorderelement (6) zugeordnet ist, das mit greifzirkelartigen Armen (7) verbunden ist, die sich elastisch auseinander bewegen können; **dadurch gekennzeichnet**, daß sie Mittel (23) zur zeitweisen Verriegelung der Drehung du Antriebswelle (13) aufweist, welche der äußeren Betätigungswelle (20) zugeordnet sind, die ein Zahnrad (22) zur Betätigung der kinematischen Mittel trägt, wobei die äußere Betätigungswelle (20) in eine Verriegelungsstellung bringbar ist, in der das Verriegelungsmittel mit der Antriebswelle (13) in Wirkverbindung tritt und diese an der Drehung hindert, und das Betätigungszahnrad (22) aus der Wirkverbindung mit den kinematischen Mitteln (10, 11, 12) gebracht wird, und in eine Betätigungstellung, in der das Verriegelungsmittel (23) aus da Wirkverbindung mit der Antriebswelle (13) gebracht wird und das Betätigungszahnrad (22) mit den kinematischen Mitteln (10, 11, 12) verbunden ist.

2. Wickelvorrichtung nach Anspruch 1, **dadurch gekennzeichnet**, daß die Betätigungswelle (20) so gelagert ist, daß sie in einer Buchse (21) gleiten kann, die an dem Gehäuse (2) befestigt ist.

3. Wickelvorrichtung nach einem der voranstehenden Ansprüche, **dadurch gekennzeichnet**, daß sie elastische Mittel aufweist, die aus einer Schraubenfeder (27) bestehen, deren Enden zwischen dem Betätigungsgetriebe (22) und der Buchse (21) aufliegen, wobei diese Feder die Verriegelungsmittel (23) elastisch in Wirkverbindung mit der Antriebswelle (13) drückt.

4. Wickelvorrichtung nach einem oder mehreren der voranstehenden Ansprüche, **dadurch gekennzeichnet**, daß die Verriegelungsvorrichtung durch einen Verriegelungsstift (23) am axialen Ende der Betätigungswelle (20) gebildet ist, der in eine Vielzahl am Umfang der Antriebswelle (13) angeordneter Zähme (24) eingreift.

5. Wickelvorrichtung nach einem oder mehreren der voranstehenden Ansprüche, **dadurch gekennzieichnet**, daß sie eine Öse (28) aufweist, welche mit der Betätigungswelle (20) außerhalb des Gehäuses (2) verbunden ist und mit einem Kurbelstab betätigbar ist, um die Betätigungswelle (20) zu drehen.

6. Wickelvorrichtung nach einem oder mehreren der voranstehenden Ansprüche, **dadurch gekennzeichnet**, daß die kinematischen Mittel eine Hilfswelle (11) aufweisen, welche innerhalb des Gehäuses (2) drehbar gelagert ist und ein fest montiertes Zahnrad (15) aufweist, das mit dem Betätigungszahnrad (22) zusammenwirken kann, wobei die Hilfswelle (11) eine Schnecke (10) aufweist, die in ein Schneckenrad (12) eingreift, welches starr auf der Antriebswelle (13) befestigt ist.

7. Wickelvorrichtung nach einem oder mehreren der voranstehenden Ansprüche, **dadurch gekennzeichnet**, daß sie innerhalb des Gehäuses (2) stoßegrenzende Mittel (30-33) aufweist, welche sich zwischen der Betätigungswelle (20) und dem Ausgang (13b) der Antriebswelle (13) befinden und so ausgebildet sind, daß sie das Aufwickeln der Markise in der falschen Richtung auf der Rolle (4) zum Aufrollen und Abrollen dieser Markise verhindern.

8. Wickelvorrichtung nach einem oder mehreren der voranstehenden Ansprüche, **dadurch gekennzeichnet**, daß die Antriebswelle (13) einen Eingangsbereich (13a) und einen Ausgengsbereich (13b) aufweist, welche miteinander über eine Verbindung (30-33) verbunden sind, die das stoßbegrenzende Mittel bildet.

9. Wickelvorrichtung nach einem oder mehreren der voranstehenden Ansprüche, **dadurch gekennzeichnet**, daß das stoßbegrenzende Mittel durch Sperrklinken (30) gebildet ist, welche Gelenkstellen (31) aufweisen und von einem Ring (32) gehalten werden, welcher starr mit dem Eingangsbereich (13a) gekoppelt ist und in einen tassenförmigen Körper (25) einführbar ist, der starr mit dem Ausgangsbereich (13b) der Antriebswelle (13) gekoppelt ist, und durch einen Flansch (33), der am Eingangsbereich (13a) der Antriebswelle (13) angeformt ist, Spulenfedern (34), die auf die Sperrklinken (30) wirken, wobei die Spulenfedern die Sperrklinken (30) nach außen drücken, um diese in Wirkverbindung mit radialen Anschlagshervorstehungen (36) zu bringen, die sich auf der inneren Oberfläche des tassenförmigen Elements (25) befinden.

10. Wickelvorrichtung nach einem oder mehreren der voranstehenden Ansprüche. **dadurch gekennzeichnet**, daß die Vielzahl von Zähnen (24), in die die Verriegelungsvorrichtung (23) eingreift auf der äußeren Oberfläche des tassenförmigen Elements (25) angeformt ist.

## Revendications

1. Enrouleur pour le fonctionnement d'auvents, particulièrement pour des véhicules en général, comprenant, à l'intérieur d'un boîtier de confinement (2), des moyens cinématiques (10,11,12) qui peuvent être manoeuvrés de l'extérieur et sont reliés, de façon opératoire, à l'arbre d'entraînement (13) d'un rouleau (4) pour enrouler et dérouler une toile (5) qui est associée à un élément frontal (6) relié à des bras (7) en forme de compas qui peuvent s'écarter de façon élastique,
caractérisé en ce qu'il comprend des moyens (23) pour verrouiller de façon temporaire la rotation dudit arbre d'entraînement (13), qui sont associés à l'arbre d'actionnement extérieur (20), qui supporte une roue dentée (22) pour l'actionnement desdits moyens cinématiques, ledit arbre d'actionnement extérieur (20) pouvant être agencé dans une position de verrouillage, dans laquelle lesdits moyens de verrouillage engagent ledit arbre d'entraînement (13), empêchant sa rotation, et ladite roue dentée d'actionnement (22) est désengagée desdits moyens cinématiques (10,11,12), et dans une position d'actionnement, dans laquelle lesdits moyens de verrouillage (23) se désengagent dudit arbre d'entraînement (13), et ladite roue dentée d'actionnement (22) se couple auxdits moyens cinématiques (10,11,12).

2. Enrouleur selon la revendication 1,
caractérisé en ce que ledit arbre d'actionnement (20) est supporté, de façon à être axialement coulissant, dans une douille (21) fixée audit boîtier de confinement (2).

3. Enrouleur selon les revendications précédentes,
caractérisé en ce qu'il comprend des moyens élastiques constitués par un ressort hélicoïdal (27) dont les extrémités aboutissent contre ladite roue dentée d'actionnement (22) et ladite douille (21), ledit ressort étant adapté pour pousser élastiquement lesdits moyens de verrouillage (23) en engagement avec ledit arbre d'entraînement (13).

4. Enrouleur selon l'une ou plusieurs des revendications précédentes,
caractérisé en ce que lesdits moyens de verrouillage sont constitués par une broche de verrouillage (23) prévue à l'extrémité axiale dudit arbre d'actionnement (20) et engrenée avec un jeu périphérique de dents (24) formé sur ledit arbre d'entraînement (13).

5. Enrouleur selon l'une ou plusieurs des revendications précédentes,
caractérisé en ce qu'il comprend un oeillet (28) qui est relié audit arbre d'actionnement (20) à l'extérieur dudit boîtier de confinement (2) et peut être engagé par une manivelle pour faire tourner ledit arbre d'actionnement (20).

6. Enrouleur selon l'une ou plusieurs des revendications précédentes,
caractérisé en ce que lesdits moyens cinématiques comprennent un arbre auxiliaire (11) qui est supporté, de façon rotative, par ledit boîtier de confinement (2) et est muni d'une roue dentée (15) qui est clavetée sur ledit arbre (11) et peut être engagée par ladite roue dentée d'actionnement (22), ledit arbre auxiliaire (11) étant muni d'une vis sans fin (10) s'engrenant avec une roue dentée hélicoïdale (12) qui tourne rigidement avec ledit arbre d'entraînement (13).

7. Enrouleur selon l'une ou plusieurs des revendications précédentes,
caractérisé en ce qu'il comprend, à l'intérieur dudit boîtier de confinement (2), des moyens limiteurs de course (30-33) qui sont interposés entre ledit arbre d'actionnement (20) et la sortie (13b) dudit arbre d'entraînement (13), et sont adaptés pour empêcher l'auvent de s'enrouler à l'inverse sur le rouleau (4) pour enrouler et dérouler ledit auvent.

8. Enrouleur selon l'une ou plusieurs des revendications précédentes,
caractérisé en ce que ledit arbre d'entraînement (13) présente une partie d'entrée (13a) et une partie de sortie (13b) reliées l'une à l'autre par un joint (30-33) fournissant lesdits moyens de limitation de course.

9. Enrouleur selon l'une ou plusieurs des revendications précédentes,
caractérisé en ce que lesdits moyens de limitation de course sont constitués par des cliquets (30) munis de pivots d'articulation (31) retenus par une bague (32) qui est rigidement couplée à ladite partie d'entrée (13e) et peut être insérée dans un corps en forme de coupe (25) rigidement couplé à ladite partie de sortie (13b) de l'arbre d'entraînement (13), et par une collerette (33) formée par ladite partie d'entrée (13a) de l'arbre d'entraînement (13), des ressorts en spirale (34) agissant sur lesdits cliquets (30), lesdits ressorts en spirale étant adaptés pour pousser lesdits cliquets (30) vers l'extérieur de façon à les engager dans des saillies de butée radiale (36) formées sur la surface interne dudit élément en forme de coupe (25).

10. Enrouleur selon l'une ou plusieurs des revendications précédentes,
caractérisé en ce que ledit jeu de dents (24), avec lequel lesdits moyens de verrouillage (23) s'engrènent, est formé sur la surface externe dudit élément en forme de coupe (25).
